# EUROPEAN PATENT APPLICATION

(11) **EP 2 871 070 A1**
(43) Date of publication of application: **13.05.2015**
(21) Application number: 14190179.3
(22) Date of filing: 23.10.2014
(51) Int. Cl.: B60C 11/03

(54) **Pneumatic tire**

(30) Priority: 12.11.2013 KR 20130136686
(71) Applicant: Hankook Tire Co., Ltd., Seoul 135-723 (KR)
(72) Inventor: Lee, Hyeun Soo, 302-749 Daejeon (KR)
(74) Representative: McCartney, Jonathan William

(57) **Abstract**

Pneumatic tire of which the stiffness of tread blocks is improved in a circumferential direction, wherein first grooves (11) of first block (20) with a short pitch length are formed to have a depth shallower than the depth second grooves (21) of a second block (20) and the stiffness of the first blocks is similar to the stiffness of the second blocks; further, a first angle of the groove walls of the first grooves (11) is larger than a second angle of the groove walls of the second grooves (21); accordingly, there is an effect of improving the braking performance or grip performance of a tire by making the stiffness of the tire uniform in the circumferential direction of the tire.

## Description

### BACKGROUND

### 1. Field of the Invention

The present invention relates to a pneumatic tire of which the stiffness of tread blocks is improved.

### 2. Description of the Related Art

In general, for the reduction of noises generated while a vehicle travels, blocks having different pitches in the circumferential direction of a tire are arranged on a tread.

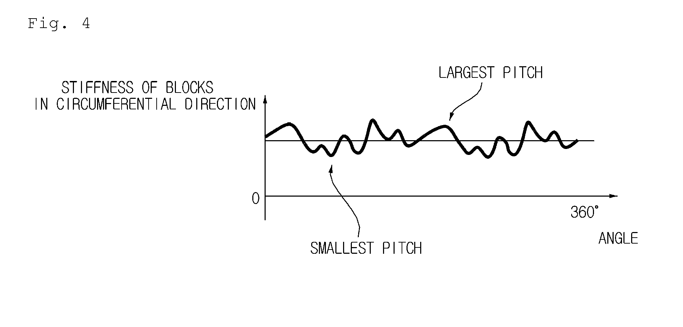

For this reason, the stiffness of the blocks having a small pitch is different from the stiffness of the blocks having a large pitch, so that the stiffness of the tire varies in the circumferential direction of the tire as shown in Fig. 4.

In this case, shimmy in which a steering wheel shakes in the clockwise direction and the counterclockwise direction while a vehicle travels or shake in which a steering wheel shakes up and down while a vehicle travels may occur, and there is a problem in that the blocks having the smallest pitch are abnormally worn out since having low stiffness.

### [Related art Document]

### [Patent Document]

[Patent Document 1] Korean Patent Application Publication No. 2006-0133664 (A method for arranging pitch of tires) (December 27, 2006)
[Patent Document 2] Korean Patent Application Publication No. 2002-0037149 (Pneumatic radial tire for heavy duty) (May 18, 2002)

### SUMMARY

In order to solve the above-mentioned problem, the present invention provides a pneumatic tire of which stiffness is similar (or is substantially constant or uniform) in the circumferential direction of the tire.

There is provided a pneumatic tire according to an embodiment of the present invention in which a plurality of blocks having different pitches are formed on a tread. The pneumatic tire includes first blocks in which first grooves are formed and which have a small pitch, and second blocks in which second grooves are formed and which have a pitch larger than the pitch of the first blocks. The depth of the second groove is larger than the depth of the first groove.

Further, the pneumatic tire may further include at least one sub-block in which sub-grooves are formed and which have a pitch larger than the pitch of the first blocks and smaller the pitch of the second blocks. The depth of the sub-groove may be larger than the depth of the first groove and smaller than the depth of the second groove.

Furthermore, a difference between the depth of the first groove and the depth of the second groove may be in the range of 2.6 mm to 3.4 mm.

Moreover, a first angle formed between the first block and the first groove may be larger than a second angle formed between the second block and the second groove.

Further, the pneumatic tire may further include at least one sub-block in which sub-grooves are formed and which have a pitch larger than the pitch of the first blocks and smaller the pitch of the second blocks. A sub-angle formed between the sub-block and the sub-groove may be smaller than the first angle and larger than the second angle.

In this case, a difference between the first angle and the second angle may be in the range of 8° to 12°.

According to the embodiments of the present invention, the second grooves are formed to have a depth larger than the depth of the first groove so that the volume of the first blocks is similar to the volume of the second blocks and the stiffness of the first blocks is similar to the stiffness of the second blocks.

Further, the first angle is made to be larger than the second angle so that the stiffness of the first blocks is similar to the stiffness of the second blocks.

Accordingly, there is an effect of improving the braking performance or grip performance of the tire by making the stiffness of the tire uniform in the circumferential direction of the tire.

### BRIEF DESCRIPTION OF THE DRAWINGS

Fig. 1 is a plan view of a pneumatic tire according to an embodiment of the present invention.
Figs. 2A and 2B are cross-sectional views taken along lines A-A' and B-B' of Fig. 1.
Figs. 3A and 3B are cross-sectional views of a pneumatic tire according to another embodiment of the present invention.
Fig. 4 is a graph showing the stiffness of blocks in the circumferential direction of a pneumatic tire in the related art.

### DETAILED DESCRIPTION

Embodiments of the present invention will be described in detail below with reference to the accompanying drawings so that those skilled in the art to which the present invention pertains can easily embody the present invention. Like portions are denoted by the same reference numerals throughout this specification.

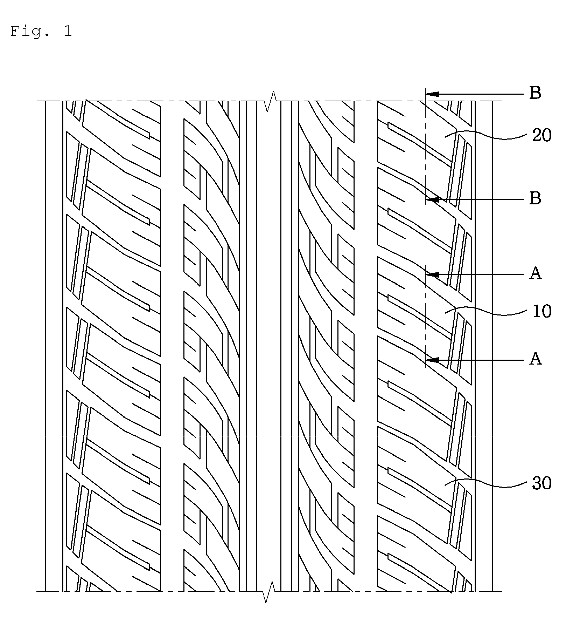

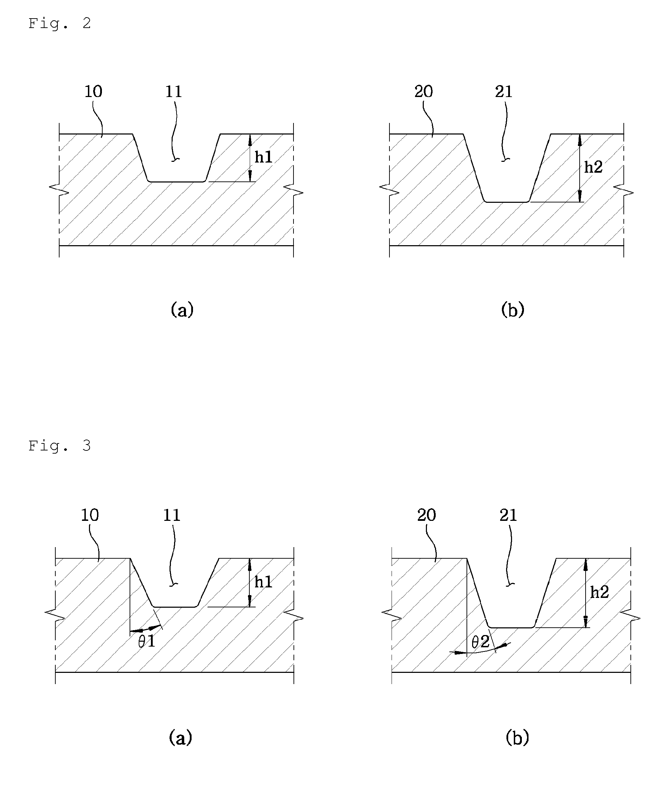

Fig. 1 is a plan view of a pneumatic tire according to an embodiment of the present invention, and Figs. 2A and 2B are cross-sectional views taken along lines A-A' and B-B' of Fig. 1.

The pneumatic tire according to the embodiment of the present invention includes first blocks 10 and second blocks 20 of which the pitch is larger than the pitch of the first blocks.

The first and second blocks 10 and 20 are protruding portions of the tread, and the traction, a braking force, cornering performance, and the like vary depending on the shapes of the blocks, such as the first blocks 10 and the second blocks 20, formed on the tread.

The second blocks 20 are formed to have a pitch larger than the pitch of the first blocks 10, and second grooves 21 formed in the second blocks 20 are formed to have a depth larger than the depth of each of first grooves 11 formed in the first blocks 10 (h1<h2 in Fig. 2).

In this case, since the first grooves 11 are formed to have a small depth even though the first blocks 10 are formed to have a pitch smaller than the pitch of the second blocks 20, the volume of the first blocks 10 is similar to the volume of the second blocks 20.

Accordingly, the stiffness of the first blocks becomes similar to the stiffness of the second blocks in the circumferential direction, so that braking performance or grip performance becomes excellent.

The blocks formed on the tread may have various kinds of pitches. That is, sub-blocks 30 having various pitches may be formed on the tread in addition to the first and second blocks 10 and 20 having two kinds of pitches.

The sub-blocks 30 are formed to have a pitch that is larger than the pitch of the first blocks 10 and smaller than the pitch of the second blocks 20. The sub-blocks 30 may be formed to have different pitches.

Sub-grooves formed in the sub-blocks 30 are formed to have a depth that is larger than the depth of the first groove 11 and smaller than the depth of the second groove 21.

Further, when a plurality of sub-blocks having different pitches are formed on the tread, sub-grooves formed in the sub-blocks having a small pitch are formed to have a depth smaller than the depth of each of the sub-grooves formed in the sub-blocks having a large pitch.

That is, the grooves having a larger depth are formed in the blocks having a larger pitch and the grooves having a smaller depth are formed in the blocks having a smaller pitch, so that the blocks have similar stiffness.

In this case, a difference between the depth of the first groove 11 and the depth of the second groove 21 is in the range of 2.6 mm to 3.4 mm. Further, the sub-grooves are formed to differentially have a depth in the range.

For example, when blocks having three kinds of pitches are arranged in the circumferential direction of the tire, the first grooves 11 are formed to have the smallest depth. The depth of the sub-groove of the sub-block, which is formed to have a pitch larger than the pitch of the first blocks, is larger than the depth of the first groove by a distance in the range of about 1.3 mm to 1.7 mm, and the depth of the sub-groove of the second block, which is formed to have a pitch larger than the pitch of the sub-blocks, is larger than the depth of the first groove by a distance in the range of 2.6 mm to 3.4 mm.

Accordingly, as the pitch of the blocks is increased, the grooves formed in the blocks are formed to have a larger depth so that the volume of the blocks is similar as a whole and the blocks have similar stiffness.

When blocks having four or more kinds of pitches are arranged in the circumferential direction of the tire, that is, when two or more kinds of sub-blocks are provided, a difference between the depth of the first groove 11, the depth of each of the sub-grooves, and the depth of the second groove 21 is not constant and a difference between the depths of the respective grooves may vary depending on a difference between the pitches of the respective blocks.

In this case, an order in which the respective blocks are arranged may be irregular. That is, the first block, the sub-block, and the second block may not be arranged in this order.

When a difference between the depth of the second groove 21 and the depth of the first groove 11 is smaller than 2.6 mm, there is a concern that a tread wear indicator of the tire may be easily exposed to the outside.

The tread is provided with a tread wear indicator that indicates the replacement time of the tire according to the degree of wear of the tire. The tread wear indicator is provided in the groove, and is exposed to the outside of the block when the tread block is worn out due to friction between the ground and itself. The tread wear indicator is a member informing a user that it is time to replace the tire when the tread wear indicator is exposed to the outside of the block.

When a difference between the depth of the first groove 11 and the depth of the second groove 21 is 2.6 mm or less, there is a concern that the tread wear indicator may be easily exposed to the outside of the block even though the depth h1 of the first groove 11 is reduced and the block is slightly worn out.

That is, since the tire should be replaced before the replacement time of the tire, there is a problem in that the tire is wasted.

Further, there is also a problem that the draining performance of the tire may deteriorate since the depth h1 of the first groove 11 is small.

On the other hand, since the depth of the second groove 21 is too large when the depth h2 of the second groove 21 is larger than the depth of the first groove 11 by a distance of 3.4 mm or more, there is a problem in that the stiffness of the second blocks 20 is reduced.

Figs. 3A and 3B are cross-sectional views of a pneumatic tire according to another embodiment of the present invention.

The pneumatic tire according to another embodiment of the present invention includes first blocks 10 and second blocks 20.

Since the structures and operations of the first blocks 10 and the second blocks are the same as those of the first and second blocks 10 and 20 of the above-mentioned embodiment, repeated description will be omitted.

First grooves 11 of another embodiment are formed to have a depth smaller than the depth of each of second grooves 21. Further, a first angle θ1 formed between the first block 10 and the first groove 11 is larger than a second angle θ2 formed between the second block 20 and the second groove 21.

The first angle θ1 means an angle that is formed between an inner side surface of the first block 10 forming the first groove 11 and a virtual vertical line extending from a vertex of the first groove 11 formed in the first block 10.

The second angle θ2 corresponds to the first angle θ1, and means an angle that is formed between an inner side surface of the second block 20 forming the second groove 21 and a virtual vertical line extending from a vertex of the second groove 21 formed in the second block 20.

When the first angle θ1 is larger than the second angle θ2 as described above, the volume of the first groove 11 formed in the first block 10 is smaller than the volume of the second groove 21. Since the volume of the first groove 11 formed in the first block 10 is smaller even though the pitch of the first blocks 10 is smaller than the pitch of the second blocks 20, the stiffness of the first blocks 10 becomes similar to the stiffness of the second blocks 20.

Since the blocks have a similar volume even though the blocks arranged in the circumferential direction of the tire have different pitches, the blocks have similar stiffness. Accordingly, braking performance or grip performance can be improved.

An angle of the sub-groove formed in the sub-block is smaller than the first angle θ1 and larger than the second angle θ2.

That is, an angle formed between an inner side surface of the block and a virtual vertical line extending from a vertex forming the groove is formed to be smaller in the case of the blocks having a larger pitch so that the volume of the block is reduced. Accordingly, it is possible to make the stiffness of the blocks having a large pitch be similar to the stiffness of the blocks having a small pitch.

In this case, a difference between the first angle θ1 and the second angle θ2 is in the range of 8° to 12°. Further, the sub-grooves are formed to differentially have an inclination angle in the range.

For example, when blocks having four kinds of pitches are arranged in the circumferential direction of the tire, that is, when first blocks, first sub-blocks, second sub-blocks, and second blocks are arranged, the inclination angles of the respective grooves can be sequentially reduced.

Specifically, when the second sub-blocks are formed to have a pitch larger than the pitch of the first sub-blocks, a first angle, an angle of a first sub-groove of the first sub-block, an angle of a second sub-groove of the second sub-block, and a second angle are sequentially reduced.

The angle of the first sub-groove is smaller than the first angle (θ1) by an angle in the range of about 3° to 4°, the angle of the second sub-groove is smaller than the angle of the first sub-groove by an angle in the range of about 3° to 4°, and the second angle θ2 is smaller than the angle of the second sub-groove by an angle in the range of about 3° to 4°.

Accordingly, the second angle θ2 is smaller than the first angle θ1 by an angle in the range of about 8° to 12°.

When the first angle θ1 is smaller than the second angle θ2 by an angle smaller than 8°, a difference between the first angle θ1 and the second angle θ2 and each sub-groove is very small. For this reason, since the stiffness of the first blocks 10, the stiffness of the second blocks 20, and the stiffness of the sub-blocks 30 are still different from one another, there is a concern that braking performance may vary in the circumferential direction of the tire.

Since the first angle θ1 is too large when the first angle θ1 is larger than the second angle θ2 by an angle larger than 12°, the space of the first groove (11) of the first block (10) is formed to be small. Accordingly, the draining performance of the first block 10 deteriorates.

The effect of the pneumatic tire according to the present invention will be described below with reference to Figs. 1 to 3.

When a plurality of blocks having different pitches are arranged in the circumferential direction of the tire, the stiffnesses of the blocks are different from each other. For this reason, there is a concern that shimmy, shake, or the like may occur.

Accordingly, the first grooves formed in the first blocks having a small pitch are formed to have a depth smaller than the depth of each of the second grooves formed in the second blocks having a large pitch so that the volume of the first blocks is increased. Therefore, it is possible to make the stiffness of the first blocks be similar to the stiffness of the second blocks.

Further, the first angle is made to be larger than the second angle so that the volume of the first blocks is increased. Accordingly, it is possible to make the stiffness of the first blocks be similar to the stiffness of the second blocks.

In the above-mentioned case, the first and second blocks having different pitches are made to have a similar volume so that the respective blocks have similar stiffness. Accordingly, there is an effect of solving problems, such as shimmy and shake, caused by a difference in stiffness between the blocks that are arranged in the circumferential direction of the tire.

Preferred embodiments of the present invention have been described in detail above, but the scope of the invention is not limited thereto and various modifications and changes, which use the concept of the present invention defined in the following claims and are made by those skilled in the art, are also included in the scope of the invention.

## Claims

1. A pneumatic tire in which a plurality of blocks having different pitches are formed on a tread, the pneumatic tire comprising:
first blocks in which first grooves are formed and which have a small pitch; and
second blocks in which second grooves are formed and which have a pitch larger than the pitch of the first blocks,
wherein the depth of the second groove is larger than the depth of the first groove.

2. The pneumatic tire according to claim 1, further comprising:
at least one sub-block in which sub-grooves are formed and which have a pitch larger than the pitch of the first blocks and smaller the pitch of the second blocks,
wherein the depth of the sub-groove is larger than the depth of the first groove and smaller than the depth of the second groove.

3. The pneumatic tire according to claim 1 or 2, wherein a difference between the depth of the first groove and the depth of the second groove is in the range of 2.6 mm to 3.4 mm.

4. The pneumatic tire according to any preceding claim, wherein a first angle formed between the first block and the first groove is larger than a second angle formed between the second block and the second groove.

5. The pneumatic tire according to claim 4, further comprising:
at least one sub-block in which sub-grooves are formed and which have a pitch larger than the pitch of the first blocks and smaller the pitch of the second blocks,
wherein a sub-angle formed between the sub-block and the sub-groove is smaller than the first angle and larger than the second angle.

6. The pneumatic tire according to claim 4 or 5, wherein a difference between the first angle and the second angle is in the range of 8° to 12°.
